# EUROPÄISCHE PATENTSCHRIFT

(11) **EP 2 333 129 B1**
(45) Veröffentlichungstag und Bekanntmachung des Hinweises auf die Patenterteilung: **18.03.2015**
(21) Anmeldenummer: 10194019.5
(22) Anmeldetag: 07.12.2010
(51) Int. Cl.: C22C 13/02, F16C 33/12

(54) **Gleitschicht**
Sliding layer
Couche de glissement

(30) Priorität: 10.12.2009 AT 19572009
(43) Veröffentlichungstag der Anmeldung: 15.06.2011
(73) Patentinhaber: Miba Gleitlager GmbH, 4663 Laakirchen (AT)
(72) Erfinder: Zidar, Jakob, 4813, Altmünster (AT)
(74) Vertreter: Burger, Hannes

(56) Entgegenhaltungen:
- WO-A1-2006/028668
- DE-U1-202007 018 616
- GB-A- 2 375 801
- US-A1- 2006 193 744

## Beschreibung

Die Erfindung betrifft eine Gleitschicht für ein Mehrschichtgleitlager aus einer Zinnbasislegierung, die neben Zinn als Hauptlegierungselement zumindest ein weiteres Element aus der Gruppe Antimon und Kupfer, gegebenenfalls Blei und/oder Bismut, sowie gegebenenfalls zumindest ein Element aus einer Gruppe umfassend Zirkonium, Silizium, Zink, Nickel und Silber, und aus der Herstellung der Elemente stammende unvermeidbare Verunreinigungen enthält, wobei der Antimonanteil maximal 20 Gew.-%, der Kupferanteil maximal 10 Gew.-%, der Summenanteil an Blei und Bismut maximal 1,5 Gew.-%, der Summenanteil an Kupfer und Antimon mindestens 2 Gew.-% und der Summenanteil an Zirkonium, Silizium, Zink, Nickel und Silber maximal 3 Gew.-% betragen, und wobei Zinn gebunden in Form intermetallischer Phasen und frei als Zinnphase mit Beta-Zinnkörnern vorliegt, ein Mehrschichtgleitlager umfassend zumindest eine Stützmetallschicht, eine Gleitschicht und gegebenenfalls eine zwischen der Gleitschicht und der Stützmetallschicht angeordnete Lagermetallschicht sowie eine Verfahren zur Herstellung der Gleitschicht.

Die Verwendung von Zinnbasislegierungen für Gleitschichten von Mehrschichtgleitlagern ist aus dem Stand der Technik bereits bekannt.

So beschreibt zum Beispiel die DE 82 06 353 U1 eine Gleitlagerschale bestehend aus einer Stahlstützschale, einer Tragschicht, eventuell einer oder mehrerer Bindungs- und/oder Sperrschichten, sowie einer galvanisch abgeschiedenen Gleitschicht aus einer Weißmetall-Lagerlegierung auf Zinnbasis mit maximal 2 Gew.-% Cu, 2 bis 18 Gew.-% Sb, 0 bis maximal 0,6 Gew.-% As, 0 bis maximal 0,5 Gew.% Ni und 0 bis maximal 1,5 Gew.% Cd.

Die DE 20 2007 018 616 U1 beschreibt ein Gleitelement das ebenfalls eine galvanisch auf eine Trägerschicht aufgebrachte Gleitschicht aus einer Zinnbasislegierung mit 5-20 Gew.-% Sb, 0,5-25 Gew.-% Cu und maximal 0,7 Gew.-% Pb. Der Gesamtgehalt sonstiger Anteile beträgt weniger als 0,5 Gew.-%. Wesentlich dabei ist, dass die Zinn-Kristalle überwiegend globular geformt sind.

Obwohl in der erstgenannten DE 82 06 353 U1 ausgeführt wird, dass ein höherer Kupferanteil nachteilig für die tribologischen Eigenschaften der Gleitschicht ist, wird in dieser DE 20 2007 018 616 U1 ausdrücklich die entgegengesetzte Lehre vertreten.

Zur Vermeidung der Reduktion des Kupferanteils in der Gleitschicht beschreibt die GB 2 375 801 A ein Mehrschichtlager mit einer zweischichtigen Gleitschicht, wobei die äußere Teilschicht aus einer Zinnbasislegierung mit 0,5-10 Gew.-% Cu und gegebenenfalls bis 5 Gew.-% Zn, In, Sb oder Ag, und die darunter liegende, zweite Teilschicht aus einer Zinnbasislegierung mit 5-20 Gew.-% Cu gebildet ist.

Aus der DE 10 2007 030 017 B4 ist eine Gleitschicht mit einer Zinnbasislegierung für ein so genanntes Rillenlager bekannt, bei dem diese Zinnbasislegierung in den Rillen der Gleitschicht eingelagert ist und die bis 20 Gew.-% Cu und gegebenenfalls bis zu 10 Gew.-% Ag bzw. bis zu 15 Gew.-% Sb enthält.

Auch die DE 100 54 461 A1 beschreibt ein Mehrschichtgleitlager mit einer dreischichtigen Gleitschicht auf Zinnbasis, um damit die Beständigkeit gegenüber fressendem Verschleiß zu erhöhen. Diese Zinnbasislegierung weist zumindest ein Metall aus einer Gruppe umfassend Cu, Sb, Ag, In, Zn, Ni, Co und Fe in einem Anteil bis 30 Gew.-% auf. Weiters können Hartpartikel in Form von Nitriden oder Carbiden in einem Anteil von bis 25 Vol.-% enthalten sein. In der Mittelschicht der Gleitschicht ist ein höherer Anteil an diesen Zusatzstoffen enthalten als in der oberen bzw. unteren Teilschicht.

Aus der DE 197 28 777 A1 ist eine Gleitschicht für ein Mehrschichtgleitlager bekannt, die neben Zinn zwischen 3 und 20 Gew.-% Cu und gegebenenfalls bis je 20 Gew.-% Bi, Ag oder Ni enthalten kann.

In der Vergangenheit wurden häufig auch Bleischichten als Gleitschichten eingesetzt, da Blei gegenüber Zinn deutlich Vorteile hat. Blei ist allerdings im Hinblick auf die Umweltverträglichkeit als problematisch anzusehen.

Es ist Aufgabe der Erfindung eine Gleitschicht anzugeben, die einen geringen Bleigehalt aufweist oder bleifrei ist.

Gelöst wird diese Aufgabe jeweils eigenständig durch die eingangs genannte Gleitschicht, bei der die Zinnkörner mit Beta-Zinn Struktur eine mittlere Größe aufweisen, die zumindest einen Wert in µm aufweist, der sich nach der Formel K = A / (S + 3*C + O) errechnet, wobei K die mittlere Korngröße in µm, A einen Faktor, S den Legierungsanteil an Antimon in Gew.-%, C den Summenlegierungsanteil an Kupfer, Silber, Nickel, und O den Summenlegierungsanteil an Blei, Bismut, Zink, anderer Legierungselemente und nichtmetallischer Partikeln in Gew.-% bedeuten. Der Faktor A hat den Wert 50, insbesondere 70, vorzugsweise 100, wobei die Zinnkörner mit Beta-Zinn Struktur in der Zinnbasislegierung jedenfalls eine mittlere Korngröße von zumindest 2,5 µm aufweisen, durch das voranstehend genannte Mehrschichtgleitlager, welches die erfindungsgemäße Gleitschicht aufweist sowie durch das Verfahren zur Herstellung der Gleitschicht, bei dem ein Elektrolyt verwendet wird, der eine Konzentration an Zinn zwischen 0,1 mol/l und 1 mol/l, eine Konzentration an Antimon und/oder Kupfer von jeweils bis maximal 0,3 mol/l, und der gegebenenfalls eine Konzentration an Blei und/oder Bismut von jeweils maximal 0,1 mol/l, und der gegebenenfalls eine Konzentration an zumindest einem Element aus der Gruppe Zirkonium, Silizium, Zink, Nickel und Silber von jeweils 0,3 mol/l aufweist, wobei die Abscheidung bei einer Stromdichte von mindestens 1,2 A/dm² erfolgt.

Erfindungsgemäß ist vorgesehen, dass die Zinnkörner mit Beta-Zinn Struktur möglichst groß sind, jedenfalls aber größer als in einer Zinnlegierung mit gleicher Zusammensetzung die nicht nach einem Verfahren der Erfindung hergestellt wurde. Durch die größeren Zinnkörner werden Diffusionsprozesse entlang der Korngrenzen vermindert und damit auch Versagensmechanismen von Gleitlagern die damit verbunden sind, wie z.B. das Korngrenzenkriechen oder die Abnahme des Kupfergehalts, wodurch ein längerer Betrieb der erfindungsgemäßen Gleitlager möglich ist. Angemerkt sei dazu, dass diese Theorie der Anmelderin keinen beschränkenden Charakter bzgl. der Erfindung hat, sondern lediglich versucht, die verbesserten Eigenschaften der Gleitschicht zu erklären. Diese Hypothese hat sich allerdings im Zuge der Prüfung der erfindungsgemäßen Gleitschichten mehrfach bestätigt.

Zur weiteren Verbesserung der Abriebfestigkeit, das heißt um der Gleitschicht eine höhere Härte zu verleihen, ist es von Vorteil, wenn der Zinnbasislegierung zumindest ein Element aus einer Gruppe umfassend Zirkonium, Silizium, Zink, Nickel und Silber in einem Anteil von in Summe maximal 3 Gew.-% zulegiert wird. Dabei kann der Anteil an Zirkonium auch maximal 1,5 Gew.-%, jener des Siliziums maximal 1,2 Gew.-% betragen.

Die voranstehend genannten Konzentrationen beziehen sich jeweils auf die Metallionen oder gegebenenfalls auf Metalle an sich, sofern diese als elementare oder in Form von Legierungspartikel vorliegen.

Es sei an dieser Stelle angemerkt, dass die Zinnkörner üblicherweise einen unregelmäßigen Habitus aufweisen. So können die Zinnkörner einerseits annähernd globular und andererseits stängelförmig, also in eine Richtung gestreckt vorliegen. Dabei sind auch sämtliche Übergänge zwischen diesen beiden Extremen möglich. Mit dem Begriff "größte Abmessung" ist im Sinne der Erfindung jene Abmessung gemeint, die bezüglich ihres Wertes am größten ist, also bei der stängelförmigen Variante der Zinnkörner die Abmessung in Längserstreckung. Mit anderen Worten definiert dieser Begriff den Durchmesser des Hüllkreises bzw. der Hüllkugel von dem ein Zinnkorn gerade eingeschlossen wird.

Durch die Formel wird berücksichtigt, dass Legierungselemente, die der Zinnbasislegierung zugesetzt werden, also z.B. Kupfer, Antimon, Blei oder Bismut, kornfeinend auf die Beta-Zinnkörner wirken und daher mit steigendem Legierungsgehalt an diesen weiteren Legierungselementen die grobkörnige Abscheidung bzw. die Kornvergröberung, z.B. durch Wärmebehandlungen der Gleitschicht, schwieriger wird.

Die mittlerer Korngröße bezeichnet im Rahmen der Erfindung das arithmetische Mittel aus den Werten, die sich je Korn als geometrisches Mittel der größten und der kleinsten Abmessung dieses Kornes, wie sie in einem Querschliff erkennbar ist, errechnet, wobei zur Mittelwertbildung vom größten im Querschliff erkennbaren Korn hin zu kleineren Körnern vorgegangen wird, bis die Summe der Querschnittsflächen der zur Mittelwertbildung herangezogenen Körner 80% der gesamten Querschnittfläche aller Beta-Zinn-Körner erreicht.
Dieses Verfahren berücksichtigt, dass bei der Herstellung eines Querschliffes Körner auch in der Nähe von Eckpunkten geschnitten werden und reduziert deren Einfluss auf das Messergebnis.

Die so bestimmte Korngröße stimmt in der Regel sehr gut mit der an wenigen repräsentativen Körnern gemessenen typischen Korngröße überein.

Zur Unterscheidung von Beta-Zinn Körnern von Körnern intermetallischer Verbindungen können beispielsweise chemische oder physikalische Ätzmethoden oder Elektronenstrahlbeugungsmethoden (EBSD) eingesetzt werden.

Vorzugsweise haben die Zinnkörner mit Beta-Zinn Struktur in der Zinnbasislegierung eine mittlere Korngröße von mindestens 5 µm, insbesondere mindestens 7 µm, besonders bevorzugt mindestens 9 µm, beträgt.

Nach einer Ausführungsvariante ist vorgesehen, dass die Beta-Zinnkörner eine mittlere Korngröße aus einem Bereich von 2,5 µm bis 40 µm aufweisen. Unterhalb einer Korngröße von 2,5 µm konnte der genannte Effekt in einem nicht ausreichenden Ausmaß beobachtet werden. Interessanterweise wurde aber auch eine Verschlechterung der Verschleißbeständigkeit festgestellt, wenn die mittlere Korngröße der Beta-Zinnkörner 40 µm übersteigt. Es wird vermutet, dass eine weitere Vergröberung der vorhandenen Struktur zu einem übermäßigen Abrieb führt.

Bevorzugt werden im Rahmen der Erfindung Ausführungsvarianten der Gleitschicht, bei welchen die Betazinnkörner eine mittlere Korngröße aus einem Bereich von 5 µm bis 40 µm, insbesondere von 10 µm bis 40 µm, aufweisen.

Wenn die Schichtdicke der Gleitschicht kleiner als 41 µm ist, wurde gefunden, dass es von Vorteil für die Verschleißbeständigkeit dieser Gleitschicht ist, wenn die Beta-Zinnkörner eine mittlere Korngröße aufweisen, die ein Achtel, vorzugsweise ein Viertel, der Schichtdicke der Gleitschicht übersteigt. In diesem Fall bleibt die Wirkung auch bei einem teilweisen Abtrag der Gleitschicht aufgrund des Verschleißes für einen längeren Zeitraum erhalten.

Bevorzugt wird im Rahmen der Erfindung, wenn der Antimonanteil zwischen 5 Gew.-% und 15 Gew.-% beträgt bzw. wenn der Kupfergehalt zwischen 0,5 Gew.-% und 5 Gew.-% beträgt. Es konnten damit Gleitschichten hergestellt werden, die neben der guten Einbettfähigkeit auch eine bessere Abriebfestigkeit aufwiesen, wobei trotzdem die Beta-Zinnkörner noch die gewünschte vorteilhafte Größe hatten.

Insbesondere kann der Antimonanteil zwischen 7 Gew.-% und 12 Gew.-% bzw. kann der Kupfergehalt zwischen 1 Gew.-% und 3,75 Gew.-% betragen.

Obwohl prinzipiell nach bleifreien Gleitschichten gesucht wurde, ist es im Rahmen der Erfindung möglich, dass ein Bleigehalt von maximal 0,1 Gew.-%, insbesondere maximal 0,05 Gew.-%, zulässig ist, wobei diese Ausführungen der Erfindung als bleifrei im Sinne der EU-Altauto-Richtline (Directive 2000/53/EC "ELV-Directive") gelten.

Für manche Anwendungen erweist es sich allerdings als Vorteil, wenn die Zinnbasislegierungen einen höheren Bleigehalt und/oder Bismutgehalt aufweist, wobei aber auch in diesen Fällen der Bleigehalt und/oder Bismutgehalt auf einen Wert zwischen 0,2 Gew.-% und 0,5 Gew.-% beschränkt wird, insbesondere auf einen Wert zwischen 0,2 Gew.-% und 0,35 Gew.-%. Es wird vermutet, dass sich Blei an den Korngrenzen anlagert und deren Festigkeit erhöht. Bismut hat offenbar dieselbe Funktion und kann in bleifreien Legierungen das Blei ersetzen.

Eine Erhöhung des Blei- und/oder Bismutgehaltes über 1,5 Gew.-% führt zu einer starken Abnahme der Warmfestigkeit der Legierungsschicht und ist somit nicht vorteilhaft.

In einer Ausführungsvariante besteht die Möglichkeit, dass Zirkonium bzw. Silizium nicht elementar bzw. als intermetallische Phasen vorliegen, sondern die Zinnbasislegierung auch einen Gehalt an Sauerstoff und/oder Kohlenstoff enthält, sodass Hartpartikel aus ZrO₂ bzw. SiC in der Zinnbasislegierung dispergiert vorliegen, wodurch ebenfalls die Festigkeit der Gleitschicht verbessert werden kann.

Dabei ist es von Vorteil, wenn diese ZrO₂- bzw. SiC-Partikeln eine mittlere Korngröße zwischen 0,01 µm und 1 µm aufweisen, um die gewünschte Korngröße der Beta-Zinnkörner zu erhalten.

Gemäß einer Ausführungsvariante des Mehrschichtgleitlagers ist vorgesehen, dass zwischen der Lagermetallschicht und der Gleitschicht eine Zwischenschicht angeordnet ist, die aus einer oder mehreren Teilschichten besteht, die galvanisch abgeschieden oder durch Diffusion gebildet werden, und jede der Teilschichten bzw. die Zwischenschicht selbst eines oder mehrere der Elemente aus der Gruppe Chrom, Nickel, Eisen, Kobalt, Kupfer und Zinn enthält. Es konnte damit dem Mehrschichtgleitlager eine bessere Strukturfestigkeit verliehen werden, insbesondere im Hinblick auf die relativ weiche Zinnbasislegierung der Gleitschicht.

Dabei ist es von Vorteil, wenn die Zwischenschicht eine Härte aufweist, die um mindestens das Dreifache größer ist als die Härte der Gleitschicht, und auch größer ist als die Härte des Untergrundmaterials, auf dem die Zwischenschicht angeordnet wird, wodurch die Gleitschicht eine bessere Abstützung am Untergrund erfährt und damit die Gleitschicht bessere, tribologische Eigenschaften aufweist bzw. weicher ist.

Von Vorteil ist es dabei, wenn die Härte der Zwischenschicht um mindestens das Fünffache größer ist als die Härte der Gleitschicht.

Zur Vergrößerung der Beta-Zinnkörner ist gemäß des erfinderischen Verfahrens vorgesehen, dass die Gleitschicht nach der galvanischen Abscheidung bei einer Temperatur ausgewählt aus einem Bereich von 130 °C und 220 °C für eine Zeit ausgewählt aus einem Bereich von 0,5 h und 100 h, wärmebehandelt wird.

Zum besseren Verständnis der Erfindung wird diese anhand der nachfolgenden Figur näher erläutert.

Es zeigt in schematisch vereinfachter Darstellung:

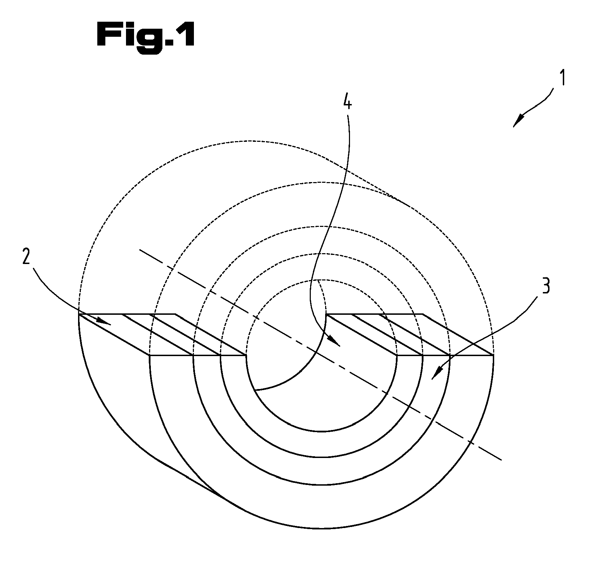

Fig. 1 ein Mehrschichtgleitlager in Form einer Gleitlagerhalbschale;

Fig. 1 zeigt einen Querschnitt durch ein Mehrschichtgleitlager 1 in Form einer Gleitlagerhalbschale. Dargestellt ist eine dreischichtige Variante des Mehrschichtgleitlagers 1, bestehend aus einer Stützmetallschicht 2, einer Lagermetallschicht 3 und einer Gleitschicht 4. Die Lagermetallschicht 3 ist zwischen der Gleitschicht 4 und der Stützmetallschicht 2 angeordnet.

Der prinzipielle Aufbau derartiger Dreischichtlager, wie sie z.B. in Kraftfahrzeugen Verwendung finden, ist aus dem Stand der Technik bekannt, sodass sich weitere Ausführungen hierzu erübrigen. Es sei jedoch erwähnt, dass weitere Schichten angeordnet werden können, also beispielsweise zwischen der Gleitschicht 4 und der Lagermetallschicht 3 eine Haftvermittlerschicht und/oder eine Diffusionssperrschicht, ebenso kann zwischen der Lagermetallschicht 3 und der Stützmetallschicht 2 eine Haftmittelschicht angeordnet werden.

Im Rahmen der Erfindung kann das Mehrschichtgleitlager 1 auch anders ausgeführt sein, beispielsweise als Lagerbuchse, wie dies in Fig. 1 strichliert angedeutet ist. Ebenso sind Ausführungen wie Anlaufringe, axial laufende Gleitschuhe, oder dergleichen möglich.

Daneben besteht im Rahmen der Erfindung die Möglichkeit, dass auf die Lagermetallschicht 3 verzichtet wird, sodass die Gleitschicht 4 entweder direkt oder unter Zwischenanordnung eines Haftvermittlers und/oder einer Diffusionssperrschicht auf die Stützmetallschicht 2 aufgebracht sein kann. Ebenso sind im Rahmen der Erfindung auch Direktbeschichtungen, beispielsweise von Pleuelaugen, möglich, sodass also die Stützmetallschicht 2 nicht zwingend schichtartig ausgeführt ist.

Die Stützmetallschicht 2 besteht üblicherweise aus Stahl bzw. einem Werkstoff, welche dem Mehrschichtgleitlager 1 die erforderliche Strukturfestigkeit verleiht. Derartige Werkstoffe sind aus dem Stand der Technik bekannt.

Als Lagermetallschicht 3 können unterschiedlichste Legierungen, wie sie für Gleitlagerelemente üblich sind, eingesetzt werden. Beispiele hierfür sind Lagermetalle auf Aluminiumbasis, z.B. AlSn6CuNi, AlSn20Cu, AlSi4Cd, AlCd3CuNi, AlSi11Cu, AlSn6Cu, AlSn40, AlSn25CuMn, AlSi11CuMgNi, AlZn4Si, oder Lagermetalle auf Kupferbasis, z.B. CuSn10, CuA110Fe5Ni5, CuZn31Si, CuPb24Sn2, CuSn8Bi10, CuSn4Zn.

Selbstverständlich können auch andere als die genannten Lagermetalle verwendet werden.

Erfindungsgemäß besteht die Gleitschicht 4 aus einer Zinnbasislegierung, die zumindest ein Element aus einer Gruppe bestehend aus Antimon und Kupfer, sowie gegebenenfalls Blei und/oder Bismut enthält. Der Anteil an Antimon beträgt maximal 20 Gew.-%, insbesondere zwischen 5 Gew.-% und 15 Gew.-%, jener an Kupfer maximal 10 Gew.-%, insbesondere zwischen 0,5 Gew.-% und 5 Gew.-%. Der Summenanteil an Blei und/oder Bismut beträgt maximal 1,5 Gew.-%, insbesondere zwischen 0,2 Gew.-% und 0,5 Gew.-%. Sofern sowohl Antimon als auch Kupfer enthalten sind, beträgt der Summenanteil dieser Elemente mindestens 2 Gew.-%, insbesondere zwischen 2 Gew.-% und 22 Gew.-%. Für im Sinne der Erfindung bleifreie Zinnbasislegierungen ist der Bleigehalt auf maximal 0,1 Gew.-%, bevorzugt maximal 0,05 Gew.-% beschränkt.

Zur Verstärkung der Zinnmatrix besteht weiters die Möglichkeit, dass die Zinnbasislegierungen zumindest ein Element aus einer Gruppe umfassend Zirkonium, Silizium, Zink, Nickel, und Silber enthalten, wobei deren Summenanteil auf maximal 3 Gew.-% beschränkt ist. Dabei kann bzw. können das Zirkonium bzw. das Silizium nicht als intermetallische Phasen vorliegen, sondern in Form von ZrO₂- bzw. SiC-Partikeln. In diesem Fall ist es von Vorteil, wenn der mittlere Durchmesser dieser Partikel auf 0,01 µm bis 1 µm, insbesondere 0,05 µm bis 0,75 µm, beschränkt wird.

Die Schichtdicke der Gleitschicht 4 kann zwischen 10 µm und 2000 µm betragen. Dabei werden Schichtdicken zwischen 500 µm und 2000 µm verwendet, wenn eine Beschichtung direkt auf der Stützmetallschicht 1 erfolgt, Schichtdicken die vorzugsweise zwischen 100 µm und 400 µm betragen, sofern die Gleitschicht 4 beispielsweise als Ersatz für Gussweißmetalle auf Bronze verwendet wird, und bei Verwendung der Gleitschicht 4 beispielsweise als Laufschicht in Dreistofflagern werden Schichtdicken zwischen 15 µm und 40 µm bevorzugt.

Wie bereits erwähnt, können im Mehrschichtgleitlager 1 auch Zwischenschichten angeordnet werden. Diese Zwischenschichten können entweder einschichtig ausgebildet sein oder aus mehreren Teilschichten bestehen. Insbesondere sind diese Zwischenschichten aus einem Element aus der Gruppe Chrom, Nickel, Eisen, Kupfer oder Zinn gebildet, wobei auch Mischvarianten möglich sind, also beispielsweise Zwischenschichten verwendet werden, die zumindest zwei dieser Elemente enthalten, z.B. aus Chrom und Nickel oder Eisen und Zinn bestehen. Für Zwischenschichten aus mehreren Teilschichten können die Anteile in den einzelnen Teilschichten unterschiedlich sein, beispielsweise kann der Gehalt an härtenden Legierungselementen Chrom, Nickel, Eisen, Kupfer von der äußersten Teilschicht unterhalb der Gleitschicht 4 beginnend in Richtung auf die Lagermetallschicht 3 oder die Stützmetallschicht 2 von einer Teilschicht auf die (jeweils) nächste Teilschicht zunehmen, beispielsweise auch in Form eines Gradienten.

Im Hinblick auf die Haftvermittlung hat es sich als vorteilhaft erwiesen, wenn als Zwischenschicht für das erfindungsgemäße Mehrschichtgleitlager 1 eine Zinnschicht oder eine Schicht aus einer Zinnbasislegierung verwendet wird.

Anstelle der angegebenen bevorzugten Zwischenschichten können auch andere, dem Stand der Technik entsprechende Zwischenschichten verwendet werden.

Die Zwischenschicht bzw. die Summe der Teilschichten kann eine Schichtdicke zwischen 0,5 µm und 10 µm, bevorzugt 1 µm bzw. 4 µm, aufweisen. Insbesondere ist es von Vorteil, wenn diese Zwischenschicht insgesamt bzw. zumindest eine der Teilschichten um das Dreifache härter ist als die Gleitschicht 4 und vorzugsweise härter als das Grundmaterial. Die Gleitschicht 4 kann beispielsweise eine Härte nach Vickers von 10 bis 50 aufweisen, sodass also die Zwischenschicht bzw. zumindest eine der Teilschichten eine Härte von HV 80 bis HV 300 aufweisen kann. Die Höhe der Prüfkraft richtet sich dabei bekanntermaßen nach der Schichtdicke der zu messenden Schicht. Bis zu einer Schichtdicke von 40 µm wird eine Prüfkraft zwischen 1 Pond und 3 Pond, zwischen 80 µm und 300 µm eine Prüfkraft bis 10 Pond verwendet.

Die Gleitschicht 4 wird bevorzugt galvanisch hergestellt. Dazu wird vorab ein Bimetallstreifen aus einer Stahlstützschicht und einer Lagermetallschicht 3 hergestellt und gegebenenfalls umgeformt und/oder spanabhebend bearbeitet. Auf der Lagermetallschicht 3 wird die erfindungsgemäße Gleitschicht 4 beispielsweise unter folgenden Bedingungen abgeschieden:

**Elektrolyt und Abscheideparameter für SnSb6Cu**

| | |
|---|---|
| Sn | 60 g/l (als Zinn(II)tetrafluoroborat) |
| Sb | 3 g/l (als Antimontrifluorid) |
| Cu | 0,5 g/l (als Kupfer(II)tetrafluoroborat |

| | |
|---|---|
| Stabilisator(en) bzw. Grundelektrolyt(e), Leitsalz(e) oder Komplexbildner Oxidationsinhibitor(en) | |

**Additiv 1 und/oder 2**

| | |
|---|---|
| Stromdichte | 3 A/dm² |
| Temperatur | 30°C |

**Elektrolyt und Abscheideparameter für SnSb11Cu4Pb**

| | |
|---|---|
| Sn | 50 g/l (als Zinn(II)tetrafluoroborat) |
| Sb | 6 g/l (als Antimontrifluorid) |
| Cu | 4 g/l (als Kupfer(II)tetrafluoroborat |
| Bi | 0,2 g/l (als Blei(III)tetrafluoroborat) |

| | |
|---|---|
| Stabilisator(en) bzw. Grundelektrolyt(e), Leitsalz(e) oder Komplexbildner Oxidationsinhibitor(en) | |

**Additive 1 und/oder 2**

| | |
|---|---|
| Stromdichte | 5 A/dm² |
| Temperatur | 15°C |

**Elektrolyt und Abscheideparameter für SnSb4Cu4Bi**

| | |
|---|---|
| Sn | 50 g/l (als Zinn(II)methansulfonat) |
| Sb | 5 g/l (als Antimontrifluorid) |
| Cu | 4 g/l (als Kupfer(II)methansulfonat) |
| Bi | 0,2 g/l (als Bismut(III)methansulfonat) |

| | |
|---|---|
| Stabilisator(en) bzw. Grundelektrolyt(e), Leitsalz(e) oder Komplexbildner Oxidationsinhibitor(en) | |

**Additive 1 und/oder 2**

| | |
|---|---|
| Stromdichte | 1,5 A/dm² |
| Temperatur | 22°C |

Zinn kann dabei als Zinn(II)tetrafluoroborat, Zinn(II)methansulfonat, Zinn(II)sulfat, Zinn(II)pyrophosphat eingesetzt werden. Generell kann die Konzentration an Zinn im Elektrolyt zwischen 0,1 mol/l und 1 mol/l betragen.

Antimon kann als Antimon(III)tetrafluoroborat, Antimontrifluorid, Antimon(III)oxid, Kaliumantimontartrat eingesetzt werden. Generell kann die Konzentration an Antimon im Elektrolyt bis zu 0,3 mol/l betragen.

Kupfer kann als Kupfer(II)tetrafluoroborat, Kupfer(II)methansulfonat, Kupfer(II)sulfat, Kupfer(II)pyrophosphat eingesetzt werden. Generell kann die Konzentration an Kupfer im Elektrolyt bis zu 0,3 mol/l betragen.

Blei kann als Blei(II)tetrafluoroborat, Blei(II)methansulfonat, Blei(II)pyrophosphat, Bleiacetat eingesetzt werden. Generell kann die Konzentration an Blei im Elektrolyt bis zu 0,01 mol/l betragen.

Bismut kann als Bismuttrifluorid, Bismut(III)methansulfonat, Bismut(III)sulfat, Bismut(III)pyrophosphat eingesetzt werden. Generell kann die Konzentration an Bismut im Elektrolyt bis zu 0,01 mol/l betragen.

Silber kann als Silbertetrafluoroborat, Silbermethansulfonat, Silberpyrophosphat, Silbersulfat eingesetzt werden. Generell kann die Konzentration an Silber im Elektrolyt bis zu 0,3 mol/l betragen.

Zink kann als Zink(II)tetrafluoroborat, Zink(II)methansulfonat, Zink(II)sulfat, Zink(II)pyrophosphat eingesetzt werden. Generell kann die Konzentration an Zink im Elektrolyt bis zu 0,3 mol/l betragen.

Nickel kann als Nickel(II)tetrafluoroborat, Nickel(II)methansulfonat, Nickel(II)sulfat, Nickel(II)pyrophosphat eingesetzt werden. Generell kann die Konzentration an Nickel im Elektrolyt bis zu 0,3 mol/l betragen.

Mögliche Stabilisatoren bzw. Grundelektrolyte, Leitsalze oder Komplexbildner sind: Tetrafluoroborsäure, Flusssäure, Methansulfonsäure, Weinsäure und deren Alkali- und Ammoniumsalze, Citronensäure und deren Alkali- und Ammoniumsalze, Ammonium- und Alkalipyrophosphate, Phosphonsäure und deren Alkali- und Ammoniumsalze, 2,2-Ethylendithiodiethanol, Phenol - und Kresolsulfonsäuren, in einer Gesamtkonzentration zwischen 0,2 mol/l und 2 mol/l.

Mögliche Oxidationsinhibitoren sind: Resorcin, Hydrochinon, Brenzkatechin, Pyrogallol, Formaldehyd, Methanol, in einer Gesamtkonzentration zwischen 0,03 mol/l und 0,3 mol/l. Mögliche Additive 1 sind: Phenolphthalein, Thioharnstoff und dessen Derivate, Alpha- oder Beta-Naphtol und deren Ethoxylate, Alpha- und Beta-Naphtholsulphonsäure und deren Ethoxylate, o-Toluidin, Hydroxychinolin, Ligninsulfonat, Butindiol, in einer Gesamtkonzentration zwischen 0,0005 mol/l und 0,05 mol/l, bevorzugt 0,002 mol/l und 0,02 mol/l. Mögliche Additive 2 sind: Gelatine, Leim, Nichtionische Tenside, Polyethylenglycol und dessen funktionalisierte Derivate, Pepton, Glycin, in einer Gesamtkonzentration zwischen 0 g/l - 20 g/l.

Es können jeweils auch Mischungen aus den voranstehend genannten Bestandteilen der Elektrolyte verwendet werden, also z.B. zumindest zwei Salze eines bzw. des jeweiligen Metalls und/oder zumindest zwei Stabilisatoren und/oder zumindest zwei Oxidationsinhibitoren und/oder zumindest zwei Additive 1 und/oder zumindest zwei Additive 2.

Zirkonium bzw. Silizium können in Form von ZrO₂- oder SiC Partikeln mit der beschriebenen Korngröße in dem Bad dispergiert sein.

Zink, Nickel, Blei, Bismut, Silber und andere Legierungselemente können in Form der oben genannten, löslichen Verbindungen oder Komplexe einem entsprechenden Elektrolyten zugesetzt und aus diesem mit abgeschieden werden. Ebenso ist eine Legierungsbildung durch Eindiffusion der Elemente in die Schicht oder Mitabscheidung von im Elektrolyten suspendierten Partikeln möglich.

Um eine ausreichende Korngröße zu erzielen wird die Gleitschicht 4 zumindest einer Wärmebehandlung, inbesondere bei einer Temperatur zwischen 130 °C und 220 °C, insbesondere zwischen 150°C und 215°C, vorzugsweise zwischen 165 °C und 190°C, also unterhalb des ersten Aufschmelzens der Legierung, für eine Zeit zwischen 0,5 h und 100 h, insbesondere zwischen 1 h und 10 h, vorzugsweise zwischen 1,5 h und 4 h, zu unterziehen, um eine Vergröberung der primär ausgeschiedenen Zinnkörner zu erreichen.

Ziel dieser untypisch hohen Wärmebehandlung bei einer Temperatur zwischen 80 % und 98 %, vorzugsweise zwischen 87 % und 92%, der absoluten Schmelztemperatur des Zinns (505 K) ist es ein stetiges Kornwachstum bei gleichzeitiger Reduktion der Kornanzahl zu erzielen.

Die Temperatur der Wärmebehandlung liegt auch über der Temperatur, die während des normalen Betriebs in der Lagerstelle zu erwarten wäre.

Bei Schichten, die einen Summenanteil von Kupfer, Nickel, Zink und Silber von über 3,3 Gew.-% oder einen Summenanteil von Bismut und Blei von über 0,9 Gew.-% enthalten, ist es von Vorteil, wenn die Temperatur einer Wärmebehandlung 200°C, vorzugsweise 180°C, nicht übersteigt. Dadurch kann verhindert werden, dass beispielsweise an Korngrenzen konzentrierte Legierungselemente Eutektika bilden und aufschmelzen.

Die so hergestellten Gleitschichten weisen eine ausgeprägte Beta-Zinnphase auf, in der mit einzelnen der und/oder zwischen den weiteren Legierungsbestandteile(n) gebildete intermetallische Phasen vorliegen.

Erfindungsgemäß ist vorgesehen, dass die Zinnkörner mit Beta-Zinn Struktur in der Zinnbasislegierung jedenfalls eine mittlere Korngröße von zumindest 2,5 µm aufweisen bzw. eine mittlere Korngröße, die sich nach voran stehend angegebener Formel errechnet.

Die Zinnkörner mit Beta-Zinn Struktur liegen in der Zinnbasislegierung normalerweise mit unterschiedlichen Korngrößen vor. Die Häufigkeit des Auftretens bestimmter Korngrößen folgt dabei zumindest annähernd einer Normalverteilung, da die Abweichung vom Mittelwert (Median) einer Vielzahl von voneinander unabhängigen Zufallsvariablen genügt.

Vorteilhaft bei der erfindungsgemäßen Zinnbasislegierung ist es, dass sie im Vergleich mit Legierungen aus dem Stand der Technik eine möglichst große mittlere Partikelgröße aufweist. Insbesondere kann ein Anteil von zumindest 70 %, bezogen auf den Anteil der im Querschliff sichtbaren Anteil der Summen-Querschnittsfläche, vorzugsweise zumindest 90%, der Zinnkörner einen mittleren Durchmesser von mindestens 5 µm aufweisen. Von Vorteil ist dabei, wenn die maximale Korngröße der Partikel einer engen Normalverteilung folgt, also die Abweichung der einzelnen Korngrößen vom Median maximal ± 1,5 µm beträgt.

Da die dem Zinn zugesetzten Legierungselemente kornfeinend auf die Zinnkörner mit Beta-Zinnstruktur wirken, ist im Rahmen der Erfindung hinsichtlich deren Korngröße gemäß einer Ausführungsvariante vorgesehen, dass die Zinnkörner mit Beta-Zinn Struktur eine mittlere Korngröße aufweisen, die sich nach der Formel K = A / (S + 3*C + O) errechnet, wobei. K die mittlere Korngröße in µm, A einen Faktor, S den Legierungsanteil an Antimon in Gew.-%, C den Summenlegierungsanteil an Kupfer, Silber, Nickel, und O den Summenlegierungsanteil an Blei, Bismut, Zink, anderer Legierungselemente und nichtmetallischer Partikeln in Gew.-% bedeuten, und der Faktor A den Wert 50, insbesondere 70, vorzugsweise 100 hat. Beispielsweise ergibt sich daraus für eine Legierung SnSb6Cu1 eine mittlere Korngröße von mindestens 5,56 µm (= 50/9) bzw. 7,8 µm (= 70/9) bzw. 11,1 µm (= 100/9), für eine Legierung SnSb11Cu4 eine mittlere Korngröße von mindestens 3,0 µm (= 70/23) bzw. 4,3 µm (= 100/23). Bei der zuletzt genannten Legierung kommt der Wert 50 für den Faktor A nicht zum Tragen, da sich damit eine mittlere Korngröße ergibt, die kleiner ist als der Mindestwert der größten Abmessung der Zinnkörner von 2,5 µm.

Somit fällt die Legierung SnSb11Cu4 nicht unter die beanspruchte Erfindung nach dem Wortlaut des Anspruchs 1.

Im Rahmen von Tests der Gleitschicht 4 wurden folgende erfindungsgemäße, beispielhafte Legierungszusammensetzungen hergestellt. Sämtliche Angaben zu Zusammensetzungen in den folgenden Tabelle 1 und 2 sind als Gew.-% zu verstehen. Den Rest auf 100 Gew.-% bildet jeweils Zinn. Die Angabe der Korngröße ist dabei als mittlere Korngröße zu verstehen.

**Tabelle 1**

| Bsp. | Sb | Cu | Pb | Sonstige | Wärmebehandlung | Korngröße Beta-Zinn [µm] | Verschleiß [µm] | Optische Bewertung |
|---|---|---|---|---|---|---|---|---|
| 1 | 11 | 3 | 0,2 | | 180 °C, 5 h | 4,0 | 3 | 2,5 |
| 2 | 6 | 0,5 | 0,4 | | 215°C, 3 h | 11,0 | 3 | 2,0 |
| 3 | 6 | 0,3 | 0,3 | Zn: 0,1 | 190°C, 10 h | 10,0 | 3 | 2,0 |
| 4 | | 2 | 0,3 | Bi: 0,8 | 135 °C, 80 h | 12,0 | 5 | 2,5 |
| 5 | | 4 | <0,05 | Ni: 0,2 | 200 °C, 2 h | 8,0 | 4 | 1,5 |
| 6 | | 3 | <0,05 | Bi: 0,25 | Keine | 6,0 | 2 | 2,0 |
| 7 | 1 | 5 | 0,4 | | 150 °C, 2 h | 5,0 | 2 | 2,5 |
| 8 | | 10 | 0,9 | ZrO₂: 1,5 | 178 °C, 3h | 7,0 | 2 | 3,0 |
| 9 | 4 | | 1 | SiC: 0,3 | 200 °C, 5h | 9,0 | 3 | 2,5 |
| 10 | 5 | 0,6 | 0,3 | ZrO₂: 0,5 | 150 °C, 3h | 8,0 | 3 | 2,0 |
| 11 | 8 | 3,5 | <0,05 | | Keine | 4,0 | 4 | 3,0 |
| 12 | 9 | 0,8 | <0,05 | Bi: 0,3 | 175 °C, 20h | 6,0 | 4 | 2,5 |
| | | | | Zn: 0,3 | | | | |
| 13 | 10 | 3 | | Bi: 0,7 | 175 °C, 10h | 5,5 | 3 | 3,0 |
| 14 | 12 | 1,3 | 0,3 | Ag: 1,0 | 150 °C, 6h | 5,0 | 5 | 3,0 |
| 15 | 12 | 5 | 0,4 | | 115 °C, 2h | 3,5 | 4 | 3,0 |
| 16 | 15 | 4 | <0,05 | | 185 °C, 4h | 5,0 | 2 | 1,5 |
| 17 | 19 | 2 | 0,8 | SiC: 1,9 | 168 °C, 1h | 4,0 | 2 | 1,5 |

Angemerkt sei dazu, dass die Wärmebehandlung in Beispiel 15 bei 115 °C keine Wärmebehandlung im Sinne der Erfindung zur Vergröberung der Zinnkörner ist, sondern diese Wärmebehandlung zu einem anderen Zweck erfolgte.

Aus Vergleichszwecken wurden die Legierungszusammensetzungen gemäß Tabelle 2 hergestellt, wobei die Abscheidung galvanisch gemäß Stand der Technik erfolgte.

**Tabelle 2: Gleitschichten nach dem Stand der Technik**

| Bsp. | Sb | Cu | Pb | Sonstige | Korngröße Beta-Zinn [µm] | Verschleiß [µm] | Optische Bewertung |
|---|---|---|---|---|---|---|---|
| I | 6 | 1 | 1 | | 4,0 | 7 | 3,5 |
| II | 5 | 0,6 | 0,2 | ZrO₂: 0,4 | 5,0 | 4 | 2,5 |
| III | | 6 | | Zn: 0,8 | 2,0 | 5 | 4,0 |
| IV | | 4 | | | 3,5 | 8 | 3,5 |
| V | | 3 | 0,3 | Ni: 0,5 | 4,0 | 7 | 3,0 |
| VI | | 6 | <0,05 | | 2,0 | 6 | 4,0 |
| VII | 5 | 0,5 | <0,05 | | 7,0 | 9 | 3,5 |
| VIII | 10 | 4 | 0,4 | | 1,5 | 4 | 4,0 |
| IX | 15 | 2 | 0,1 | | 2,0 | 12 | 5,0 |
| X | | 5 | | Ag: 2 | 2,0 | 3 | 3,5 |
| XI | 8 | 2 | | Bi: 0,5 | 3,0 | 5 | 4,0 |

In den Tabellen 1 und 2 sind auch die Prüfergebnisse für die Beispiele 1 bis 17 sowie I bis XI wiedergegeben.

Die Prüfung erfolgte an Gleitlagerhalbschalen entsprechend Fig. 1 aus einer Stahlstützschicht 2 und einer Bleibronze Lagermetallschicht 3 mit einer Gleitschicht 4 von 25 - 35 µm Schichtdicke. Die Prüfung der Lagerschalen erfolgte mit schwellender Last und einer spezifische Lastamplitude von 60 MPa über 3 Millionen Lastzyklen bei einer Gleitgeschwindigkeit von 12 m/s.
Nach der Prüfung wurden die Halbschalen vermessen und so der Verschleiß der Gleitschicht 4 bestimmt. Die Dauerfestigkeit der Gleitschicht 4 wurde optisch beurteilt.

Die optische Bewertung von 1 bis 5 deckt den Zustand von sehr gut (1: Laufspuren) bis sehr schlecht (5: großflächige, starke Dauerbrüche) ab.

Die Messung der Korngrößen erfolgte anhand von Schliffbildern, die Lichtmikroskopisch aufgenommen wurden, wobei die Auswertung wie oben beschrieben erfolgte. Es wurden dazu Schliffbilder von jeweils zwei orthogonal zueinander stehenden Ebenen aufgenommen.

Es zeigt sich deutlich, dass im Vergleich zu den Beispielen nach dem Stand der Technik die erfindungsgemäßen Gleitschichten bessere Werte bzgl. des Verschleißes und der Dauerfestigkeit aufweisen, insbesondere beim direkten Vergleich von Schichten gleicher oder ähnlicher chemischer Zusammensetzung.

Aus den gesammelten Versuchsergebnissen, die hier nicht alle zur Gänze wiedergegeben werden können, hat sich gezeigt, dass hinsichtlich der Verschleißbeständigkeit und der Fressneigung vorteilhafte Gleitschichten 4 erhalten werden, wenn die Beta-Zinnkörner eine Mindestkorngröße aufweisen bzw. einen bestimmten Wert einer ausgeprägten Dimension in zumindest einer Richtung überschreiten.

Nach einer weiteren Ausführungsvariante der Erfindung kann vorgesehen sein, dass die Beta-Zinnkörner eine mittlere Korngröße aufweisen, die um mindestens 50 %, vorzugsweise mindestens 100 %, insbesondere mindestens 200 %, größer ist als die mittlere Korngröße der intermetallischen Phasen der Gleitschicht 4, wobei bzgl. der Angabe "mittlere" voranstehende Ausführungen dazu entsprechend anzuwenden sind. Es werden damit ebenfalls die voranstehend genannten Effekte verbessert.

Es wird vermutet, dass eine weitere Verbesserung der tribologischen Eigenschaften der Gleitschicht 4 erreicht werden kann, wenn die Beta-Zinnkörner nach zumindest einer kristallografischen Richtung bevorzugt orientiert in der Gleitschicht 4 enthalten sind.

Die Ausführungsbeispiele zeigen mögliche Ausführungsvarianten der Gleitschicht 4 bzw. des Mehrschichtgleitlagers 1, wobei an dieser Stelle bemerkt sei, dass die Erfindung nicht auf die speziell dargestellten Ausführungsvarianten derselben eingeschränkt ist. Vor allem können die in Tabelle 1 wiedergegeben Zusammensetzungen von Gleitschichten 4 den Gegenstand von jeweils eigenständigen Erfindungen darstellen.

### Bezugszeichenaufstellung

- 1: Mehrschichtgleitlager
- 2: Stützmetallschicht
- 3: Lagermetallschicht
- 4: Gleitschicht

## Patentansprüche

1. Gleitschicht (4) für ein Mehrschichtgleitlager (1) aus einer Zinnbasislegierung, die neben Zinn als Hauptlegierungselement zumindest ein weiteres Element aus der Gruppe Antimon und Kupfer, gegebenenfalls Blei und/oder Bismut, sowie gegebenenfalls zumindest ein Element aus einer Gruppe umfassend Zirkonium, Silizium, Zink, Nickel und Silber, und aus der Herstellung der Elemente stammende unvermeidbare Verunreinigungen enthält, wobei der Antimonanteil maximal 20 Gew.-%, der Kupferanteil maximal 10 Gew.-%, der Summenanteil an Blei und Bismut maximal 1,5 Gew.-%, der Summenanteil an Kupfer und Antimon mindestens 2 Gew.-% und der Summenanteil an Zirkonium, Silizium, Zink, Nickel und Silber maximal 3 Gew.-% betragen und wobei Zinn gebunden in Form intermetallischer Phasen und frei als Zinnphase mit Beta-Zinnkörnern vorliegt, **dadurch gekennzeichnet, dass** die Zinnkörner mit Beta-Zinn Struktur eine mittlere Größe aufweisen, die zumindest einen Wert in µm aufweist, die sich nach der Formel K = A / (S + 3*C + O) errechnet, wobei K die mittlere Korngröße in µm, A einen Faktor, S den Legierungsanteil an Antimon in Gew.-%, C den Summenlegierungsanteil an Kupfer, Silber, Nickel, und O den Summenlegierungsanteil an Blei, Bismut, Zink, anderer Legierungselemente und nichtmetallischer Partikeln in Gew.-% bedeuten, und der Faktor A den Wert 50, insbesondere 70, vorzugsweise 100 hat und wobei die mittlere Korngröße das arithmetische Mittel aus den Werten bezeichnet, die sich je Korn als geometrisches Mittel der größten und der kleinsten Abmessung dieses Kornes, wie sie in einem Querschliff erkennbar ist, errechnet, wobei zur Mittelwertbildung vom größten im Querschliff erkennbaren Korn hin zu kleineren Körnern vorgegangen wird, bis die Summe der Querschnittsflächen der zur Mittelwertbildung herangezogenen Körner 80% der gesamten Querschnittfläche aller Beta-Zinn-Körner erreicht, wobei die Zinnkörner mit Beta-Zinn Struktur in der Zinnbasislegierung jedenfalls eine mittlere Korngröße von zumindest 2,5 µm aufweisen.

2. Gleitschicht (4) nach Anspruch 1, **dadurch gekennzeichnet, dass** die Zinnkörner mit Beta-Zinn Struktur eine mittlere Korngröße aus einem Bereich von 2,5 µm bis 40 µm aufweisen.

3. Gleitschicht (4) nach Anspruch 1 oder 2, **dadurch gekennzeichnet, dass** die Zinnkörner mit Beta-Zinn Struktur eine mittlere Korngröße aufweisen, die ein Achtel der Schichtdicke der Gleitschicht übersteigt, wenn diese kleiner als 41 µm ist, wobei die mittlere Korngröße das arithmetische Mittel aus zumindest fünf Einzelwerten für die größte Abmessung der Zinnkörner ist.

4. Gleitschicht (4) nach einem der Ansprüche 1 bis 3, **dadurch gekennzeichnet, dass** der Antimonanteil zwischen 5 Gew.-% und 15 Gew.-% beträgt.

5. Gleitschicht nach einem der Ansprüche 1 bis 4, **dadurch gekennzeichnet, dass** der Kupfergehalt zwischen 0,5 Gew.-% und 5 Gew.-% beträgt.

6. Gleitschicht (4) nach einem der Ansprüche 1 bis 5, **dadurch gekennzeichnet, dass** der Bleigehalt und/oder Bismutgehalt zwischen 0,2 Gew.-% und 0,5 Gew.-% beträgt.

7. Gleitschicht (4) nach einem der Ansprüche 1 bis 5, **dadurch gekennzeichnet, dass** der Bleigehalt maximal 0,1 Gew.-% beträgt.

8. Gleitschicht (4) nach einem der Ansprüche 1 bis 7, **dadurch gekennzeichnet, dass** Zirkonium bzw. Silizium in Form von ZrO₂- bzw. SiC-Partikeln in der Zinnbasislegierung vorliegt bzw. vorliegen.

9. Gleitschicht (4) nach Anspruch 8, **dadurch gekennzeichnet, dass** die ZrO₂- bzw. SiC - Partikeln eine mittlere Größe zwischen 0,01 µm und 1 µm aufweisen.

10. Mehrschichtgleitlager (1) umfassend zumindest eine Stützmetallschicht (2), eine Gleitschicht (4) und gegebenenfalls eine zwischen der Gleitschicht (4) und der Stützmetallschicht (2) angeordnete Lagermetallschicht (3), **dadurch gekennzeichnet**, das die Gleitschicht (4) nach einem der vorhergehenden Ansprüche gebildet ist.

11. Mehrschichtgleitlager (1) nach Anspruch 10, **dadurch gekennzeichnet, dass** zwischen der Lagermetallschicht (3) und der Gleitschicht (4) eine Zwischenschicht angeordnet ist, die aus einer oder mehreren Teilschichten besteht, die galvanisch abgeschieden oder durch Diffusion gebildet werden, und jede der Teilschichten eines oder mehrere Elemente der Gruppe Chrom, Nickel, Eisen, Kobalt, Kupfer und Zinn enthält.

12. Mehrschichtgleitlager (1) nach Anspruch 11, **dadurch gekennzeichnet, dass** die Zwischenschicht eine Härte aufweist die um mindestens das Dreifache größer ist als die Härte der Gleitschicht (4) und vorzugsweise auch größer ist als das Untergrundmaterial.

13. Verfahren zur Herstellung einer Gleitschicht (4) für ein Mehrschichtgleitlager (1) aus einer Zinnbasislegierung, die neben Zinn als Hauptlegierungselement zumindest ein weiteres Element aus der Gruppe Antimon und Kupfer, gegebenenfalls Blei und/oder Bismut, sowie gegebenenfalls zumindest ein Element aus einer Gruppe umfassend Zirkonium, Silizium, Zink, Nickel und Silber, und aus der Herstellung der Elemente stammende unvermeidbare Verunreinigungen enthält, wobei der Antimonanteil maximal 20 Gew.-%, der Kupferanteil maximal 10 Gew.-%, der Summenanteil an Blei und Bismut maximal 1,5 Gew.-%, der Summenanteil an Kupfer und Antimon mindestens 2 Gew.-% und der Summenanteil an Zirkonium, Silizium, Zink, Nickel und Silber maximal 3 Gew.-% betragen, und wobei Zinn gebunden in Form intermetallischer Phasen und frei als Zinnphase mit Beta-Zinnkörnern vorliegt, wobei die Gleitschicht (4) galvanisch aus einem Elektrolyt abgeschieden wird, der eine Konzentration an Zinn zwischen 0,1 mol/l und 1 mol/l, eine Konzentration an Antimon und/oder Kupfer von jeweils bis maximal 0,3 mol/l, gegebenenfalls eine Konzentration an Blei und/oder Bismut von jeweils maximal 0,1 mol/l, und der gegebenenfalls eine Konzentration an zumindest einem Element aus der Gruppe Zirkonium, Silizium, Zink, Nickel und Silber von jeweils 0,3 mol/l aufweist, und die Abscheidung bei einer Stromdichte von mindestens 1,2 A/dm² erfolgt, **dadurch gekennzeichnet, dass** die Gleitschicht nach der galvanischen Abscheidung bei einer Temperatur ausgewählt aus einem Bereich von 130 °C und 220 °C für eine Zeit ausgewählt aus einem Bereich von 0,5 h und 100 h wärmebehandelt wird.

## Claims

1. Anti-friction coating (4) for a multi-layered friction bearing (1) made from a tin-based alloy which, in addition to tin as the main alloying element, contains at least one other element from the group antimony and copper, optionally lead and/or bismuth, and optionally at least one element from a group comprising zirconium, silicon, zinc, nickel and silver, and unavoidable impurities originating from the elements used to produce it, and the proportion of antimony is at most 20% by weight, the proportion of copper is at most 10% by weight, the total proportion of lead and bismuth is at most 1.5% by weight, the total proportion of copper and antimony is at least 2% by weight and the total proportion of zirconium, silicon, zinc, nickel and silver is at most 3% by weight, and tin is present bonded in the form of inter-metallic phases and freely as a tin phase with beta-tin grains, **characterized in that** the tin grains with beta-tin structure have a mean size with at least a value in µm calculated on the basis of the formula K = A / (S + 3*C + O), where K stands for the mean grain size in µm, A stands for a factor, S stands for the proportion of antimony in the alloy as a % by weight, C stands for the total proportion of copper, silver, nickel in the alloy and O stands for the total of lead, bismuth, zinc and further alloying elements and non-metallic particles as a % by weight, and the factor A has the value 50, in particular 70, preferably 100, and the mean grain size denotes the arithmetic mean of the values calculated taking each grain as a geometric mean of the biggest and the smallest dimension if this grain as visible in a grain pattern, and the calculation is repeated to determine the biggest grain perceptible in the pattern through to smaller grains until the sum if the cross-sectional surfaces of the grains used to determine the mean represent 80% of the total cross-sectional surface of all the beta-tin grains, and the tin grains with beta-tin structure in the tin-based alloy in any event have a mean grain size of at least 2.5 µm.

2. Anti-friction coating (4) according to claim 1, **characterized in that** the tin grains with beta-tin structure have a mean grain size in a range of 2.5 µm to 40 µm.

3. Anti-friction coating (4) according to claim 1 or 2, **characterized in that** the tin grains with beta-tin structure have a mean grain size which is greater than one eighth of the coating thickness of the anti-friction coating if the coating thickness is less than 41 µm, and the mean grain size is the arithmetic mean obtained from at least five individual values for the biggest dimension of the tin grains.

4. Anti-friction coating (4) according to one of claims 1 to 3, **characterized in that** the proportion of antimony is between 5% by weight and 15% by weight.

5. Anti-friction coating (4) according to one of claims 1 to 4, **characterized in that** the copper content is between 0.5% by weight and 5% by weight.

6. Anti-friction coating (4) according to one of claims 1 to 5, **characterized in that** the lead content and/or bismuth content is between 0.2% by weight and 0.5% by weight.

7. Anti-friction coating (4) according to one of claims 1 to 5, **characterized in that** the lead content is at most 0.1% by weight.

8. Anti-friction coating (4) according to one of claims 1 to 7, **characterized in that** zirconium and silicon is or are present in the form of Zr02 or SiC particles in the tin-based alloy.

9. Anti-friction coating (4) according to claim 8, **characterized in that** the Zr02 or the SiC particles have a mean size of between 0.01 µm and 1 µm.

10. Multi-layered friction bearing (1) comprising at least one metal base layer (2), an anti-friction coating (4) and optionally a bearing metal layer (3) disposed between the anti-friction coating (4) and the metal base layer (2), **characterized in that** the anti-friction coating (4) is embodied according to one of the preceding claims.

11. Multi-layered friction bearing (1) according to claim 10, **characterized in that** an intermediate coating is disposed between the bearing metal layer (3) and the anti-friction coating (4), which is made up of one or more partial coatings which are galvanically deposited or formed by diffusion, and each of the partial coatings contains one or more elements from the group chromium, nickel, iron, cobalt, copper and tin.

12. Multi-layered friction bearing (1) according to claim 11, **characterized in that** the intermediate coating has a hardness that is at least three times higher than the hardness of the anti-friction coating (4) and is preferably also higher than that of the underlying material.

13. Method of producing an anti-friction coating (4) for a multi-layered friction bearing (1) made from a tin-based alloy, which, in addiction to tin as the main alloying element, contains at least one other element from the group antimony and copper, optionally lead and/or bismuth, and optionally at least one element from a group comprising zirconium, silicon, zinc, nickel and silver, and unavoidable impurities originating from the elements used to produce it, and the proportion of antimony is at most 20% by weight, the proportion of copper is at most 10% by weight, the total proportion of lead and bismuth is at most 1.5% by weight, the total proportion of copper and antimony is at least 2% by weight and the total proportion of zirconium, silicon, zinc, nickel and silver is at most 3% by weight, and tin is present bonded in the form of inter-metallic phases and freely as a tin phase with beta-tin grains, and the anti-friction coating (4) is galvanically deposited from an electrolyte which has a concentration of tin of between 0.1 mol/l and 1 mol/l, a concentration of antimony and/or copper of up to at most 0.3 mol/l respectively, optionally a concentration of lead and/or bismuth of at most 0.1 mol/l respectively, and which optionally contains a concentration of at least one element from the group comprising zirconium, silicon, zinc, nickel and silver of 0.3 mol/l respectively, and deposition takes place at a current density of at least 1,2 A/dm², **characterized in that** the anti-friction coating is treated after the galvanic deposition at a temperature selected from a range of 130 °C and 220 °C for a period selected from a range of 0.5h and 100h.

## Revendications

1. Couche de glissement (4) pour un palier lisse multicouche (1) en alliage à base d'étain qui contient, outre l'étain en tant qu'élément d'alliage principal, au moins un autre élément issu du groupe antimoine et cuivre, éventuellement plomb et/ou bismuth, ainsi qu'éventuellement au moins un élément issu du groupe comprenant le zirconium, le silicium, le zinc, le nickel et l'argent, et des impuretés inévitables provenant de la fabrication des éléments, la proportion d'antimoine étant de 20 %-poids maximum, la proportion de cuivre étant de 10-% poids maximum, la proportion cumulée de plomb et de bismuth étant de 1,5 %-poids maximum, la proportion cumulée de cuivre et d'antimoine étant au minimum de 2 %-poids, et la proportion cumulée de zirconium, de silicium, de zinc, de nickel et d'argent étant de 3 %-poids maximum, et l'étain étant présent de façon liée sous forme de phases intermétalliques et de façon libre en tant que phase d'étain avec des grains d'étain bêta, **caractérisée en ce que** les grains d'étain avec une structure d'étain bêta présentent une taille moyenne qui présente au moins une valeur en µm qui se calcule selon la formule K = A / (S + 3*C + O), K désignant la taille de grains moyenne en µm, A un facteur, S la proportion d'antimoine dans l'alliage en %-poids, C la proportion cumulée de cuivre, d'argent, de nickel dans l'alliage, et O la proportion cumulée de plomb, bismuth, zinc, d'autres éléments d'alliage et de particules non métalliques dans l'alliage en %-poids, et le facteur A a la valeur 50, en particulier 70, de préférence 100, et la taille de grains moyenne désignant la moyenne arithmétique tirée des valeurs qui se calculent par grain en tant que moyenne géométrique de la plus grande et de la plus petite dimension de ce grain telle qu'elle est identifiable dans une coupe transversale, la procédure de formation de la valeur moyenne s'effectuant en partant du grain le plus grand identifiable dans la coupe transversale jusqu'aux grains les plus petits jusqu'à ce que la somme des surfaces de section transversale des grains utilisés pour la formation de la valeur moyenne atteigne 80 % de la surface de section transversale totale de tous les grains d'étain bêta, les grains d'étain avec une structure d'étain bêta dans l'alliage à base d'étain présentant en tout cas une taille de grains moyenne d'au moins 2,5 µm.

2. Couche de glissement (4) selon la revendication 1, **caractérisée en ce que** les grains d'étain avec une structure d'étain bêta présentent une taille de grains moyenne dans une plage de 2,5 µm à 40 µm.

3. Couche de glissement (4) selon la revendication 1 ou 2, **caractérisée en ce que** les grains d'étain avec une structure d'étain bêta présentent une taille de grains moyenne qui dépasse un huitième de l'épaisseur de couche de la couche de glissement si celle-ci est inférieure à 41 µm, la taille de grains moyenne étant la moyenne arithmétique tirée d'au moins cinq valeurs individuelles pour la plus grande dimension des grains d'étain.

4. Couche de glissement (4) selon une des revendications 1 à 3, **caractérisée en ce que** la proportion d'antimoine est comprise entre 5 %-poids et 15 %-poids.

5. Couche de glissement selon une des revendications 1 à 4, **caractérisée en ce que** la teneur en cuivre est comprise entre 0,5 %-poids et 5 %-poids.

6. Couche de glissement (4) selon une des revendications 1 à 5, **caractérisée en ce que** la teneur en plomb et/ou la teneur en bismuth est comprise entre 0,2 %-poids et 0,5 %-poids.

7. Couche de glissement (4) selon une des revendications 1 à 5, **caractérisée en ce que** la teneur en plomb est au maximum de 0,1 %-poids.

8. Couche de glissement (4) selon une des revendications 1 à 7, **caractérisée en ce que** le zirconium ou respectivement le silicium se présente ou respectivement se présentent sous forme de particules de ZrO2 ou respectivement de SiC dans l'alliage à base d'étain.

9. Couche de glissement (4) selon la revendication 8, **caractérisée en ce que** les particules de ZrO2 ou respectivement de SiC présentent une taille moyenne entre 0,01 µm et 1 µm.

10. Palier lisse multicouche (1), comprenant au moins une couche métallique de support (2), une couche de glissement (4) et éventuellement une couche métallique de palier (3) disposée entre la couche de glissement (4) et la couche métallique de support (2), **caractérisé en ce que** la couche de glissement (4) est formée selon une des revendications précédentes.

11. Palier lisse multicouche (1) selon la revendication 10, **caractérisé en ce qu'**une couche intermédiaire est disposée entre la couche métallique de palier (3) et la couche de glissement (4) et se compose d'une ou de plusieurs couches partielles qui sont séparées galvaniquement ou sont formées par diffusion, et **en ce que** chacune des couches partielles contient un ou plusieurs éléments issu(s) du groupe chrome, nickel, fer, cobalt, cuivre et étain.

12. Palier lisse multicouche (1) selon la revendication 11, **caractérisé en ce que** la couche intermédiaire présente une dureté qui est au moins trois fois plus grande que la dureté de la couche de glissement (4) et qui est de préférence également plus grande que le matériau du substrat.

13. Procédé de fabrication d'une couche de glissement (4) pour un palier lisse multicouche (1) en alliage à base d'étain qui contient, outre l'étain en tant qu'élément d'alliage principal, au moins un autre élément issu du groupe antimoine et cuivre, éventuellement plomb et/ou bismuth, ainsi qu'éventuellement au moins un élément parmi le groupe comprenant le zirconium, le silicium, le zinc, le nickel et l'argent, et des impuretés inévitables provenant de la fabrication des éléments, la proportion d'antimoine étant de 20 %-poids maximum, la proportion de cuivre étant de 10 %-poids maximum, la proportion cumulée de plomb et de bismuth étant de 1,5 %-poids maximum, la proportion cumulée de cuivre et d'antimoine étant au minimum de 2 %-poids, et la proportion cumulée de zirconium, de silicium, de zinc, de nickel et d'argent étant de 3 %-poids maximum, et l'étain étant présent de façon liée sous forme de phases intermétalliques et de façon libre en tant que phase d'étain avec des grains d'étain bêta, la couche de glissement (4) étant séparée galvaniquement à partir d'un électrolyte qui présente une concentration en étain entre 0,1 mol/l et 1 mol, une concentration en antimoine et/ou en cuivre de respectivement 0,3 mol/l maximum, éventuellement une concentration en plomb et/ou en bismuth de respectivement 0,1 mol/l maximum, et qui présente éventuellement une concentration en au moins un élément issu du groupe zirconium, silicium, zinc, nickel et argent de respectivement 0,3 mol/l maximum, et la séparation s'effectuant à une densité de courant d'au moins 1,2 A/dm2, **caractérisé en ce que** la couche de glissement, après la séparation galvanique, est soumise à un traitement thermique à une température sélectionnée dans une plage de 130 °C à 220 °C pendant une durée sélectionnée dans une plage de 0,5 h à 100 h.
